# EUROPÄISCHE PATENTANMELDUNG

(11) **EP 4 446 617 A1**
(43) Veröffentlichungstag der Anmeldung: **16.10.2024**
(21) Anmeldenummer: 23167953.1
(22) Anmeldetag: 14.04.2023
(51) Int. Cl.: F16H 57/028, F16H 57/08, F16H 57/021, H02K 7/18, F16H 57/02

(54) **GETRIEBEWELLE FÜR EIN PLANETENGETRIEBE**

(71) Anmelder: Flender GmbH, 46395 Bocholt (DE)
(72) Erfinder: REISCH, Sebastian, 46395 Bocholt (DE); KÖNIG, Christian, 46395 Bocholt (DE); RÜHL, Marco, 46395 Bocholt (DE); VENNEMANN, Michael, 46395 Bocholt (DE); SIGLE, Christof, 5300 Hallwang (AT); KARI, Alexander, 5330 Fuschl am See (AT)
(74) Vertreter: Michalski Hüttermann & Partner Patentanwälte mbB

(57) **Zusammenfassung**

Es ist eine Getriebewelle (32), insbesondere Sonnenwelle, für ein Planetengetriebe, vorgesehen mit einer ersten Koppelstelle (30), insbesondere Verzahnung, zum Einleiten eines Drehmoments und einer zweiten Koppelstelle (52) zum Ausleiten des Drehmoments, insbesondere an eine Rotorwelle (34) eines Generators (14), wobei ein Weg eines Drehmomentflusses (54) von der ersten Koppelstelle (30) zu der zweiten Koppelstelle (52) größer als ein axialer Abstand zwischen der ersten Koppelstelle (30) zu der zweiten Koppelstelle (52) ist. Durch den verlängerten Weg des Drehmomentflusses (54) kann die Steifigkeit und die Eigenfrequenz eines schwingungsfähigen Gesamtsystems mit der Getriebewelle (32) reduziert werden, wodurch eine Reduktion von störenden Schwingungen in einem Planetengetriebe ermöglicht ist.

## Beschreibung

Die Erfindung betrifft eine Getriebewelle, insbesondere Sonnenwelle, für ein Planetengetriebe, mit dessen Hilfe eine Drehmomentübertragung erreicht werden kann. Zudem betrifft die Erfindung eine Planetenstufe, insbesondere ein Planetengetriebe, mit einer derartigen Getriebewelle, ein Windgetriebe mit einer derartigen Planetenstufe, einen Antriebsstrang mit einem derartigen Windgetriebe, eine Verwendung einer derartigen Getriebewelle sowie ein Datenagglomerat zur additiven Fertigung und/oder Simulation derartiger Vorrichtungen.

Aus DE 19926301 A1 ist es bekannt bei einem Windgetriebe für eine Windkraftanlage ein Sonnenrad eines Planetengetriebes mit Planetenrädern des Planetengetriebes schrägverzahnt kämmen zu lassen, um Vibrationen und Geräuschemissionen zu reduzieren oder zu vermeiden.

Es besteht ein ständiges Bedürfnis störende Schwingungen bei Planetengetrieben zu reduzieren.

Es ist die Aufgabe der Erfindung Maßnahmen aufzuzeigen, die eine Reduktion von störenden Schwingungen in einem Planetengetriebe ermöglichen.

Die Lösung der Aufgabe erfolgt durch eine Getriebewelle mit den Merkmalen des Anspruchs 1, einer Planetenstufe mit den Merkmalen des Anspruchs 10, ein Windgetriebe mit den Merkmalen des Anspruchs 11, einen Antriebsstrang mit den Merkmalen des Anspruchs 12, einer Verwendung mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft eine Getriebewelle, insbesondere Sonnenwelle, für ein Planetengetriebe, mit einer ersten Koppelstelle, insbesondere Verzahnung, zum Einleiten eines Drehmoments und einer zweiten Koppelstelle zum Ausleiten des Drehmoments, insbesondere an eine Rotorwelle eines Generators, wobei die axialen Anteile eines Wegs eines Drehmomentflusses von der ersten Koppelstelle zu der zweiten Koppelstelle größer als ein axialer Abstand zwischen der ersten Koppelstelle zu der zweiten Koppelstelle ist.

Zwischen zwei den Abstand der Koppelstellen definierenden Punkten, über die auch der Drehmomentfluss verläuft, ist die Summe der axialen Anteile des Drehmomentflusses größer als der axiale Abstand der Koppelstellen zueinander. Der Drehmomentfluss über die Getriebewelle nimmt nicht den kürzesten Weg zwischen der ersten Koppelstelle und der zweiten Koppelstelle. Stattdessen kann beispielsweise der Drehmomentfluss von der ersten Koppelstelle kommend entlang eines ersten Durchmessers an der zweiten Koppelstelle vorbeigeführt werden, nachfolgend auf einen von dem ersten Durchmesser verschiedenen zweiten Durchmesser umgelenkt werden und entlang des zweiten Durchmessers in entgegengesetzter Richtung an dem Drehmomentfluss auf dem ersten Durchmesser vorbei zur zweiten Koppelstelle gelangen. Der Drehmomentfluss kann zwischen den Koppelstellen einen schlangenförmigen, mäanderförmigen und/oder zick-zack-förmigen Verlauf aufweisen, so dass sich für den Drehmomentfluss im Vergleich zu dem Abstand der Koppelstellen ein Umweg ergibt. Durch den bewussten Umweg für den Drehmomentfluss kann selbst bei einer sehr kompakten Bauweise des Getriebes mit der erfindungsgemäßen Getriebewelle die effektive Länge, die der Drehmomentfluss zwischen der ersten Koppelstelle und der zweiten Koppelstelle entlang fließen muss, signifikant vergrößert werden. Die vergrößerte effektive Länge führt zu einer reduzierten Steifigkeit der Getriebewelle und damit zu einer deutlich abgesenkten Eigenfrequenz des Gesamtsystems, insbesondere Windgetriebe und/oder Antriebsstrang einer Windkraftanlage, in dem diese Getriebewelle verwendet wird. Dadurch können sich aufschaukelnde Resonanzschwingungen vermieden werden, so dass Beschädigungen und/oder unnötige Geräuschemissionen zumindest reduziert werden können. Ansonsten erforderliche Schwingungsdämpfer und/oder Schwingungstilger können eingespart werden, so dass der Bauraumbedarf und die Herstellungskosten reduziert werden können. Zudem ist es möglich die Getriebewelle besonders torsionsweich und/oder biegeweich auszugestalten. Durch den verlängerten Weg des Drehmomentflusses kann die Steifigkeit und die Eigenfrequenz eines schwingungsfähigen Gesamtsystems mit der Getriebewelle reduziert werden, wodurch eine Reduktion von störenden Schwingungen in einem Planetengetriebe ermöglicht ist.

Beispielsweise kann in einem Ausführungsbeispiel ein Antriebsstrang einer Windkraftanlage mit einem sogenannten mittelschnellen ("midspeed") Antriebsstrangkonzept versehen sein, bei dem ein Generator der Windkraftanlage mit einer Drehzahl zwischen 100 U/min und 1000 U/min betrieben werden soll und ein zwischen dem Windkraftrotor und dem Generator zwischengeschaltetes Windgetriebe eine Übersetzung zwischen 10 und 80 bereitstellen soll. Insbesondere ist es möglich, dass eine als herkömmliche Sonnenwelle ausgestaltete Getriebewelle einer Planetenstufe und/oder eines Planetengetriebes des Windgetriebes zu einer Eigenfrequenz von ca. 200 Hz für den Antriebsstrang führen würde, die damit in den Bereich möglicher Zahneingrifffrequenzen des Windgetriebes fallen würde, so dass Resonanzeffekte nicht sicher ausgeschlossen werden können, während sich mit einer erfindungsgemäßen als Sonnenwelle ausgestalteten Getriebewelle in der identischen Einbausituation eine Eigenfrequenz von 70 Hz für den Antriebsstrang erreichen lässt, die sicher außerhalb zu erwartender Zahneingrifffrequenzen des Windgetriebes liegt und einen überkritischen Betrieb sicherstellen kann. Insbesondere in einer letzten Getriebestufe des Windgetriebes, die mit der Rotorwelle des Generators verbunden werden soll, kann eine deutliche Verschiebung der kritischen Eigenfrequenzen bzw. -moden erreicht werden. Dadurch kann mit einem geringen konstruktiven Aufwand das Auftreten von Resonanzschwingungen im laufenden Betrieb und/oder Geräuschemissionen zumindest reduziert werden.

Die Getriebewelle ist insbesondere zur Übertragung des gesamten auftretenden Drehmoments dimensioniert. Die Getriebewelle kann vorzugsweise als Eingangswelle und/oder als Ausgangswelle eines Planetengetriebes verwendet werden, beispielsweise als Planetenträgerwelle und/oder Sonnenwelle. Wenn die Getriebewelle in Leistungsrichtung des Drehmomentflusses zwischen zwei Planetenstufen vorgesehen ist, kann die Getriebewelle vorzugsweise sowohl als Sonnenwelle für die eine Planetenstufe und als Planetenträgerwelle für die andere Planetenstufe verwendet werden. Vorzugsweise ist die Getriebewelle ausgestaltet und/oder dimensioniert, um durch eine Drehung um eine Hauptdrehachse einer Planetenstufe und/oder Planetengetriebe das gesamte auftretende Drehmoment in die Planetenstufe und/oder in das Planetengetriebe einzuleiten und/oder aus der Planetenstufe und/oder aus dem Planetengetriebe auszuleiten.

Die, insbesondere mehrteilige, Getriebewelle weist insbesondere nur genau die zwei Koppelstellen auf, über die der Drehmomentfluss zwischen der Getriebewelle und einem anderen Getriebebauteil ausgetauscht wird. Eine dritte Koppelstelle, mit deren Hilfe ein leistungsverzweigtes Getriebe, beispielsweise ein Summiergetriebe oder Verteilergetriebe, ausgebildet werden kann, ist vermieden. Dadurch kann im Wesentlichen der gesamte Drehmomentfluss entlang der designierten Leistungsrichtung über rotierende Getriebekomponenten, also abgesehen von ggf. auftretenden Lager- und Stützkräften an Radial- und/oder Axiallagern zur Lagerung der Getriebewelle und/oder Bremsen, über die beiden Koppelstellen fließen. Ein geschlossener Kraftpfad über feststehende Bauteile, insbesondere über ein Gehäuse, bleibt bei der Betrachtung des Drehmomentflusses unberücksichtigt. In der Regel ist das zugehörige Getriebe dazu ausgebildet über 95%, insbesondere über 98%, der eingangsseitigen Leistung entlang des Drehmomentflusses bis an eine das Getriebe verlassene Ausgangswelle zu übertragen. Vorzugsweise ist die Getriebewelle von der ersten Koppelstelle aus betrachtet jenseits der zweiten Koppelstelle ungelagert, so dass die Getriebewelle zumindest von der zweiten Koppelstelle an frei schwingen kann, wodurch die Eigenfrequenz des schwingungsfähigen Gesamtsystems verlagert werden kann und/oder störende Frequenzen getilgt oder zumindest gedämpft werden können. Besonders bevorzugt ist die gesamte Getriebewelle ungelagert, wobei insbesondere eine Lagerung der Getriebewelle nur indirekt über die Lagerung des im Drehmomentfluss entlang der Leistungsrichtung vorgelagerten drehmomentübertragenden Bauteil und/oder des im Drehmomentfluss entlang der Leistungsrichtung nachgelagerten drehmomentübertragenden Bauteil erfolgt.

Die erste Koppelstelle kann ein im Drehmomentfluss entlang der Leistungsrichtung vorgelagertes drehmomentübertragendes Bauteil ankoppeln. Insbesondere wenn die Getriebewelle als Sonnenwelle ausgestaltet ist, kann die erste Koppelstelle als Verzahnung ausgebildet sein, wobei die Verzahnung die Verzahnung eines insbesondere einstückig angebundenen Sonnenrads darstellen kann oder als Verzahnung, insbesondere Kurzverzahnung, zur drehfesten Verbindung, insbesondere über eine Steckverzahnung, des Sonnenrads mit der als Sonnenwelle ausgestalteten Getriebewelle ausgebildet ist. Beispielsweise kann die erste Koppelstelle als Flansch einer Flanschverbindung ausgestaltet sein, die eine lösbare Befestigung mit dem vorgelagerten Bauteil ermöglicht. Es ist auch möglich, dass die erste Koppelstelle eine unlösbare Verbindung mit dem insbesondere als Planetenträger einer vorgelagerten Planetenstufe ausgestalteten Bauteil ausbildet. Die Getriebewelle kann beispielsweise durch Schweißen, Löten, Anformen oder sogar durch eine einstückige Ausgestaltung mit dem vorgelagerten Bauteil angekoppelt sein. In dem Fall einer einstückigen Ausgestaltung steht die Getriebewelle von einem deutlich größeren Durchmesser des vorgelagerten Bauteils, insbesondere eine Trägerwange eines Planetenträgers, in axialer Richtung ab, wobei die erste Koppelstelle der Getriebewelle an der Axialseite des Bauteils mit dem größeren Durchmesser auf der Seite der Getriebewelle ausgebildet ist. Die erste Koppelstelle kann auch als Feder/Nut-Verbindung, insbesondere Passfedernut-Verbindung oder als (Stirnrad-)Verzahnung oder Presssitz ausgestaltet sein, wodurch sich für die erste Koppelstelle eine erkennbare axiale Erstreckung ergibt.

Ein im Drehmomentfluss entlang der Leistungsrichtung nachgelagertes drehmomentübertragendes Bauteil kann an der zweite Koppelstelle der Getriebewelle angekoppelt werden. Bei dem nachgelagerten drehmomentübertragenden Bauteil handelt es sich insbesondere um eine Rotorwelle eines Generators, mit dem ein Rotor einer elektrischen Maschine drehfest verbunden ist. Der Rotor weist insbesondere Permanentmagnete auf, die mit Elektromagneten eines Stators der elektrischen Maschine elektromagnetisch zusammenwirken kann. Die mit dem Rotor verbundene Rotorwelle erstreckt sich zumindest teilweise innerhalb des Generators, vorzugsweise radial innerhalb eines Generatorgehäuses. Die Rotorwelle kann sich vorzugsweise einstückig bis in das Getriebe der Getriebewelle hinein erstrecken und dadurch gleichzeitig eine aus dem Getriebe, insbesondere aus einem Getriebegehäuse, heraus abstehende Ausgangswelle des Getriebes ausbilden. Die Rotorwelle ist insbesondere an dem Generatorgehäuse, an dem Getriebegehäuse und/oder an einem Zwischenstück oder Zwischenwand zwischen dem Getriebe und dem Generator, vorzugsweise über ein Wälzlager, gelagert. Alternativ kann die Rotorwelle mit einer koaxial zur Rotorwelle aus dem Getriebe abstehenden Ausgangswelle des Getriebes lösbar verbunden werden, beispielsweise über eine Feder/Nut-Verbindung, eine Flanschverbindung und/oder eine Schrumpfscheibe. In diesem Fall ist es die Ausgangswelle, die über ein separates Lager, insbesondere Wälzlager, an dem Getriebegehäuse an dem Generatorgehäuse und/oder an einem Zwischenstück oder Zwischenwand zwischen dem Getriebe und dem Generator gelagert ist und das entlang der Leistungsrichtung nachgelagerte drehmomentübertragende Bauteil für die Getriebewelle ausbildet. Alternativ kann das im Drehmomentfluss entlang der Leistungsrichtung nachgelagertes drehmomentübertragendes Bauteil als Teil eines Planetengetriebes, insbesondere Sonnenrad oder Planetenrad, ausgestaltet sein. Vorzugsweise verläuft der Drehmomentfluss von der ersten Koppelstelle zu der zweiten Koppelstelle ausschließlich über ungelagerte Axialbereiche der Getriebewelle. Eine direkte oder indirekte Lagerung der Getriebewelle kann ausschließlich außerhalb derjenigen Axialbereiche der Getriebewelle vorgesehen sein, die nicht für den in Leistungsrichtung fließenden Drehmomentfluss vorgesehen sind. Eine direkt gelagerte Welle, dessen Lagerstelle der Drehmomentfluss in Leistungsrichtung passiert, ist in diesem Fall nicht mehr Teil der Getriebewelle, sondern eine von der Getriebewelle verschiedene separate Welle.

Die zweite Koppelstelle kann als Verzahnung, insbesondere Kurzverzahnung ausgestaltet sein, mit der eine korrespondierende Verzahnung der Ausgangswelle des Getriebes und/oder eine Rotorwelle des Generators drehfest, insbesondere über eine Steckverzahnung, gekoppelt werden kann. Prinzipiell ist es möglich, dass die Verzahnung der zweiten Koppelstelle als Verzahnung für einen Planetenträger und/oder ein Sonnenrad und/oder Planetenräder einer Planetenstufe und/oder für eine Stirnradverzahnung verwendet werden kann. Die Verzahnung der zweiten Koppelstelle kann geradeverzahnt oder schrägverzahnt ausgestaltet sein. Vorzugsweise ist die Verzahnung ballig ausgeführt, um eine Montage zu erleichtern und/oder in vorgegebenen Grenzen ein Verkippen der Getriebewellen zuzulassen. Vorzugsweise ist die zweite Koppelstelle als Flansch ausgestaltet, so dass die Getriebewelle mit einer Ausgangswelle des Getriebes und/oder einer Rotorwelle des Generators verschraubt werden kann. Unnötiger Verschleiß kann dadurch vermieden werden und die Steifigkeit sowie die Eigenfrequenz des Antriebsstrangs weiter reduziert werden. Alternativ kann die zweite Koppelstelle auch als Feder/Nut-Verbindung, insbesondere Passfedernut-Verbindung oder als (Stirnrad-)Verzahnung oder Presssitz ausgestaltet sein, wodurch sich für die zweite Koppelstelle eine erkennbare axiale Erstreckung ergibt.

Insbesondere gilt für den Weg W des Drehmomentflusses und dem Abstand A von voneinander wegweisenden Axialseiten der ersten Koppelstelle und der zweiten Koppelstelle 1,1 ≤ W/A ≤ 12,0, insbesondere 1,5 ≤ W/A ≤ 6,0, vorzugsweise 2,0 ≤ W/A ≤ 4,0 und besonders bevorzugt 2,5 ≤ W/A ≤ 3,0. Dadurch ergibt sich für den Drehmomentfluss bezogen auf den Abstand Ader Koppelstellen ein bewusst vorgesehener Umweg von der Länge ca. W-A. Insbesondere steht die Getriebewelle um eine Strecke von ca. (W-A)/2 von der zweiten Koppelstelle in eine von der ersten Koppelstelle weg weisenden Axialrichtung ab. Die Länge dieses Umwegs kann je nach Bauraumsituation und auftretenden Drehzahlen geeignet dimensioniert werden, um die Eigenfrequenz des Antriebsstrangs in einen Bereich einzustellen, der von den auftretenden Anregungsfrequenzen weit genug entfernt ist, um Resonanzeffekte und Geräuschemissionen zumindest zu reduzieren oder sogar zu vermeiden.

Vorzugsweise ist eine Gesamterstreckung L der Getriebewelle größer als der Abstand A von voneinander wegweisenden Axialseiten der ersten Koppelstelle und der zweiten Koppelstelle, wobei 1,01 ≤ L/A ≤ 6,0, insbesondere 1,05 ≤ L/A ≤ 4,0, vorzugsweise 1,10 ≤ L/A ≤ 2,0 und besonders bevorzugt 1,25 ≤ L/A ≤ 1,75 gilt. Dadurch kann die Getriebewelle um eine Strecke von L-A von der zweiten Koppelstelle in eine von der ersten Koppelstelle weg weisenden Axialrichtung abstehen. Der Drehmomentfluss kann bezogen auf den Abstand Ader Koppelstellen insbesondere einen bewusst vorgesehenen Umweg von der Länge ca. 2(L-A) erfahren. Die Länge dieses Umwegs kann je nach Bauraumsituation und auftretenden Drehzahlen geeignet dimensioniert werden, um die Eigenfrequenz des Antriebsstrangs in einen Bereich einzustellen, der von den auftretenden Zahneingrifffequenzen weit genug entfernt ist, um Resonanzeffekte und Geräuschemissionen zumindest zu reduzieren oder sogar zu vermeiden.

Die Getriebewelle kann von der ersten Koppelstelle aus betrachtet mit einer Strecke S über die zweite Koppelstelle hinaus überstehen, wobei insbesondere im Wesentlichen S = L-A und/oder S = (W-A)/2 gilt. Die Getriebewelle kann insbesondere ungelagert abkragen. Bezogen auf eine Breite B in axialer Richtung der Getriebewelle der insbesondere als Verzahnung ausgebildeten ersten Koppelstelle kann 0,5 ≤ SB ≤ 10,0, insbesondere 1,0 ≤ S/B ≤ 8,0, vorzugsweise 1,5 ≤ S/B ≤ 5,0 und besonders bevorzugt 2,0 ≤ S/B ≤ 4,0 gelten.

Besonders bevorzugt ist die erste Koppelstelle mit einer ersten Welle direkt verbunden und die zweite Koppelstelle ist mit einer von der ersten Welle verschiedenen und mit der ersten Welle direkt oder indirekt über mindestens eine Zwischenwelle drehfest verbundenen zweiten Welle direkt verbunden, wobei die erste Welle und die zweite Welle in radialer Richtung betrachtet sich einander zumindest teilweise in einem gemeinsamen Axialbereich überlappen, wobei insbesondere die mindestens eine Zwischenwelle in radialer Richtung innerhalb des gemeinsamen Axialbereichs in radialer Richtung zwischen der ersten Welle und der zweiten Welle angeordnet ist. Die erste Welle und die zweite Welle sowie die mindestens eine gegebenenfalls vorgesehene Zwischenwelle können in axialer Richtung, insbesondere koaxial, ineinander eingesteckt sein, so dass sich eine radiale Schachtelung der Getriebewelle ergibt, bei der sich die einzelnen (Teil-)Wellen der Getriebewelle einen gemeinsamen Axialbereich auf unterschiedlichen einander nicht störenden Durchmessern teilen. Der Drehmomentfluss kann dadurch über die einzelnen Wellen im zick-zack fließen, so dass sich auf einem geringen Bauraumbedarf eine große effektive Länge für die Getriebewelle ergibt. Eine für eine bestimmte Eigenfrequenz des schwingungsfähigen Gesamtsystems gewünschte effektive Länge kann bei einem ausreichenden Bauraumbedarf in radialer Richtung über eine Mehrzahl von ineinander geschachtelten Hohlwellen zusammengesetzt werden, wobei hierbei insbesondere auch zwei, drei, vier oder noch mehr als Hohlwellen ausgestaltete Zwischenwellen vorgesehen sein können.

Insbesondere weist die erste Welle einen Außendurchmesser d1 und die zweite Welle einen Außendurchmesser d2 auf, wobei für ein als d1/d2 oder d2/d1 definiertes Verhältnis V 1,01 ≤ V ≤ 5,0, insbesondere 1,05 ≤ V ≤ 3,0, vorzugsweise 1,10 ≤ V ≤ 2,0 und besonders bevorzugt 1,25 ≤ V ≤ 1,5 gilt. Die Durchmesser der Wellen unterscheiden sich dadurch stark genug, dass zumindest eine der Wellen als Hohlwelle ausgestaltet werden kann und abgesehen von der drehfesten Verbindung ohne ein Anschlagen an der anderen Welle diese Welle in ihrem Inneren aufnehmen kann.

Vorzugsweise ist die, insbesondere als Steckverzahnung oder Flanschverbindung ausgestaltete, drehfeste Verbindung der ersten Welle mit der zweiten Welle oder mit der Zwischenwelle in axialer Richtung außerhalb eines Axialbereichs der ersten Koppelstelle und der zweiten Koppelstelle und außerhalb eines axialen Zwischenraums zwischen der ersten Koppelstelle und der zweiten Koppelstelle ausgebildet. Die drehfeste Verbindung der ersten Welle mit der zweiten Welle oder mit der in Richtung des Drehmomentflusses unmittelbar nachfolgenden Zwischenwelle kann dadurch in einem von der zweiten Koppelstelle in einer von der ersten Koppelstelle weg weisenden Richtung abkragen Bereich ausgebildet sein. Eine unnötige Versteifung der Getriebewelle durch die drehfeste Verbindung kann durch die zusätzliche effektive Länge der Getriebewelle für den Drehmomentfluss vermieden oder zumindest reduziert werden.

Besonders bevorzugt ist die erste Welle außerhalb der ersten Koppelstelle und/oder die zweite Welle außerhalb der zweiten Koppelstelle sowie jeweils außerhalb der drehfesten Verbindung als Hohlwelle mit einer Wandstärke s ausgebildet, wobei bezogen auf eine Länge l der ersten Welle und/oder der zweiten Welle außerhalb der jeweiligen Koppelstelle und außerhalb der drehfesten Verbindung 0,01 ≤ s/l ≤ 0,50, insbesondere 0,02 ≤ s/l ≤ 0,25, vorzugsweise 0,03 ≤ s/l ≤ 0,15 und besonders bevorzugt 0,05 ≤ s/l ≤ 0,10 gilt. Diese Wandstärke ist groß genug, um die im Betrieb auftretenden mechanischen Lasten ertragen zu können. Gleichzeitig ermöglicht diese Wandstärke eine torsionsweiche und/oder biegeweiche Ausgestaltung der Getriebewelle. Außerdem ist es bei einen geringen radialen Bauraumbedarf leicht möglich die erste Welle und die zweite Welle ineinander einzustecken.

Insbesondere ist ein die erste Welle und die zweite Welle oder die Zwischenwelle und/oder die zweite Welle und die Zwischenwelle kontaktierendes elastisch verformbares Dämpferelement und/oder, insbesondere schaltbares und/oder regelbares, Kupplungselement vorgesehen. Das Dämpferelement kann insbesondere aus einem Elastomer und/oder einem künstlichen oder natürlichen Kautschuk, insbesondere Gummi, hergestellt sein. Das Dämpferelement kann in der Art eines Abstandshalters ein relatives Verkippen der jeweiligen kontaktierten Welle zueinander zumindest begrenzen. Gleichzeitig kann das Dämpferelement, das vorzugsweise eine progressiv verlaufende Federkennlinie aufweist, eine elastische Verformung, insbesondere Torsion und/oder Biegung der Welle, in einem ausreichenden Ausmaß zulassen. Das Kupplungselement kann eine starre Kupplung, beispielsweise eine Stahllamellenkupplung, sein. Insbesondere kann das Kupplungselement als eine elastische Kupplung ausgestaltet sein, das unter elastische Verformung eines Elastikelements ein Verkippen und/oder ein Verdrehen und/oder einen Achsversatz zumindest in einem vordefinierten begrenzten Ausmaß zulässt. Durch das Dämpferelement und/oder das elastische Kupplungselement kann eine bewusste reibungsbehaftete Dämpfung bereitgestellt werden, die ein Durchlaufen eines Resonanzbereichs der Getriebewelle beim Anfahren erleichtert und auftretende Resonanzschwingungen begrenzt. Nach dem Durchlaufen des Resonanzbereichs kann der Effekt des Dämpferelements und/oder das elastische Kupplungselements so gering sein, dass eine Beeinträchtigung der Steifigkeitsreduktion der Getriebewelle vernachlässigbar ist. Besonders bevorzugt ist das Dämpferelement und/oder das Kupplungselement schaltbar ausgeführt, so dass durch ein aktives Schalten die Dämpfungs- und/oder Federeigenschaften verändert werden können. Dies ermöglicht es beispielsweise für den Anfahrvorgang eine stärkere reibungsbehaftete Dämpfung vorzusehen, die im regulären Betrieb reduziert oder sogar deaktiviert werden kann. Innerhalb kritischer Drehzahlbereiche kann durch die zugeschaltete Dämpfung eine Beschädigung von Getriebekomponenten vermieden werden, während außerhalb kritischer Drehzahlbereiche das Dämpferelement und/oder das Kupplungselement geschont werden können und unnötige Leistungsverluste durch Reibungseffekte vermieden werden können. Das Schalten kann beispielsweise automatisiert in Reaktion eines Sensorsignals und/oder in Reaktion eines fliehkraftbedingt betätigbaren Schaltelements erfolgen.

Vorzugsweise ist zwischen der ersten Koppelstelle und der zweiten Koppelstelle innerhalb des Drehmomentflusses eine elektrische Isolierung ausgebildet, wobei insbesondere die zweite Welle und/oder eine/die Zwischenwelle ganz oder zumindest abschnittsweise aus einem elektrisch isolierenden Material hergestellt ist. Durch das als elektrischer Isolator wirkende elektrisch isolierenden Material, insbesondere Nichtleitermaterial, ist ein so ausreichend wirksames Dielektrikum vorgesehen, dass selbst an der engsten Stelle zwischen elektrisch leitenden Bauteilen Getriebewelle ein Spannungsüberschlag längst des Drehmomentflusses und/oder quer zum Drehmomentfluss im regulären Betrieb der Windkraftanlage sicher vermieden werden kann. Von dem Generator in die Getriebewelle induzierte Ströme und/oder Streu- beziehungsweise Leckageströme des Generators können allenfalls bis vor dem aus dem elektrisch isolierenden Material hergestellten Teilbereich der Generatorwelle gelangen. Über die Positionierung des elektrisch isolierenden Materials innerhalb der Getriebewelle kann daher ein durch elektrische Spannungen und/oder elektrische Ströme beeinträchtigter Bereich geschützt werden.

Ein weiterer Aspekt betrifft eine Planetenstufe, insbesondere Planetengetriebe, mit einer, insbesondere als Sonnenwelle ausgebildeten, Getriebewelle, die wie vorstehend beschrieben aus- und weitergebildet sein kann, wobei vorzugsweise die erste Koppelstelle in einem gemeinsamen Axialbereich mit Planetenrädern und/oder einem Hohlrad der Planetenstufe angeordnet ist und die zweite Koppelstelle zu den Planetenrädern und/oder dem Hohlrad axial beabstandet angeordnet ist. Alternativ, insbesondere bei einer Reduzierstufe, kann die zweite Koppelstelle in einem gemeinsamen Axialbereich mit Planetenrädern und/oder einem Hohlrad der Planetenstufe angeordnet sein, während die erste Koppelstelle zu den Planetenrädern und/oder dem Hohlrad axial beabstandet angeordnet ist. Die Getriebewelle ist insbesondere zur Übertragung des gesamten auftretenden Drehmoments dimensioniert. Die Getriebewelle kann vorzugsweise als Eingangswelle und/oder als Ausgangswelle des Planetengetriebes verwendet werden, beispielsweise als Planetenträgerwelle und/oder Sonnenwelle. Die Getriebewelle kann insbesondere durch eine Drehung um eine Hauptdrehachse der Planetenstufe das gesamte auftretende Drehmoment in die Planetenstufe einleiten und/oder aus der Planetenstufe ausleiten. Durch den verlängerten Weg des Drehmomentflusses kann die Steifigkeit und die Eigenfrequenz des Antriebsstrangs mit der Planetenstufe reduziert werden, wodurch eine Reduktion von störenden Schwingungen in einer Planetenstufe, insbesondere Planetengetriebe, ermöglicht ist.

Ein weiterer Aspekt betrifft ein Windgetriebe zur Drehzahlwandlung in einem Antriebstrang einer Windkraftanlage, mit mindestens einer Planetenstufe, die wie vorstehend beschrieben aus- und weitergebildet sein kann, und einem Getriebegehäuse, wobei insbesondere das Getriebegehäuse in radialer Richtung der Getriebewelle betrachtet die Getriebewelle ganz oder nur teilweise überdeckt, wobei vorzugsweise das Getriebegehäuse sowohl die erste Koppelstelle als auch die zweite Koppelstelle der Getriebewelle überdeckt. Insbesondere kann ein Teil der Getriebewelle der Planetenstufe generatorseitig aus dem Getriebegehäuse herausragen, während sowohl die erste Koppelstelle als auch die zweite Koppelstelle innerhalb des Getriebegehäuses angeordnet sind. Durch den verlängerten Weg des Drehmomentflusses kann die Steifigkeit und die Eigenfrequenz des Antriebsstrangs mit der Planetenstufe des Windgetriebes reduziert werden, wodurch eine Reduktion von störenden Schwingungen in einem Windgetriebe ermöglicht ist.

Ein weiterer Aspekt betrifft einen Antriebsstrang für eine Windkraftanlage, mit einem Windgetriebe, das wie vorstehend beschrieben aus- und weitergebildet sein kann, zum Wandeln eines von einem Windrotor einleitbaren Drehmoments und einem mit dem Windgetriebe gekoppelten Generator zur Erzeugung elektrischer Energie aus dem mit Hilfe des Windgetriebes eingeleiteten Drehmomentfluss, wobei insbesondere der gesamte in den Generator eingeleitete Drehmomentfluss über die Getriebewelle verläuft. Durch den verlängerten Weg des Drehmomentflusses kann die Steifigkeit und die Eigenfrequenz des Antriebsstrangs reduziert werden, wodurch eine Reduktion von störenden Schwingungen in einem Windgetriebe ermöglicht ist.

Insbesondere ist vorgesehen, dass ein Teil der Getriebewelle des Windgetriebes in den Generator hineinragt und die erste Koppelstelle in dem Windgetriebe vorgesehen ist, wobei die die zweite Koppelstelle innerhalb des Windgetriebe oder innerhalb des Generators vorgesehen ist .Wenn die zweite Koppelstelle innerhalb des Windgetriebes vorgesehen ist, kann die Getriebewelle mit der Ausgangswelle des Windgetriebes und/oder der Rotorwelle des Generators getriebeseitig, also auf die erste Koppelstelle zuweisend und/oder zwischen der ersten Koppelstelle und einem Rotor beziehungsweise Rotorträger des Generators, befestigt werden. Wenn die zweite Koppelstelle innerhalb des Generators vorgesehen ist, kann die Getriebewelle mit der Ausgangswelle des Windgetriebes und/oder der Rotorwelle des Generators generatorseitig, also von der ersten Koppelstellen weg weisend, befestigt werden. Beispielsweise ist die zweite Koppelstelle an einem generatorseitigen axialen Ende der Generatorwelle, insbesondere über eine Flanschverbindung, befestigt. Die zweite Koppelstelle kann auch an einem generatorseitigen axialen Ende der Ausgangswelle vorgesehen sein, so dass sich an der zweiten Koppelstelle generatorseitig die Generatorwelle und/oder der Rotorträger anschließen kann. Dies ermöglicht unterschiedliche Montagemöglichkeiten und/oder Montagereihenfolgen, so dass Antriebsstrang für eine bessere Wartungsfreundlichkeit bei einer vereinfachten Montage optimiert werden kann.

Vorzugsweise gilt für eine Eigenfrequenz f Antriebsstrangs 10 Hz ≤ f ≤ 150 Hz, vorzugsweise 20 Hz ≤ f ≤ 100 Hz, weiter bevorzugt 30 Hz ≤ f ≤ 80 Hz und besonders bevorzugt 40 Hz ≤ f ≤ 75 Hz. Insbesondere wenn die Getriebewelle in einer letzten Getriebestufe des Windgetriebes, die mit der Rotorwelle des Generators verbunden werden soll, vorgesehen ist, kann eine deutliche Verschiebung der kritischen Eigenfrequenzen bzw. -moden erreicht werden. Dadurch kann mit einem geringen konstruktiven Aufwand das Auftreten von Resonanzschwingungen im laufenden Betrieb und/oder Geräuschemissionen zumindest reduziert werden.

Ein weiterer Aspekt betrifft eine Windkraftanlage zur Erzeugung elektrischer Energie aus Windkraft mit einem Antriebsstrang der wie vorstehend beschrieben aus- und weitergebildet sein kann, und einem eingangsseitig an dem Windgetriebe angeschlossenen Windrotor zum Einleiten eines durch Windkraft an dem Windrotor erzeugten Drehmoments. Durch den verlängerten Weg des Drehmomentflusses kann die Steifigkeit und die Eigenfrequenz der Windkraftanlage reduziert werden, wodurch eine Reduktion von störenden Schwingungen in einer Windkraftanlage ermöglicht ist.

Besonders bevorzugt gilt für eine Eigenfrequenz f der Windkraftanlage 10 Hz ≤ f ≤ 150 Hz, vorzugsweise 20 Hz ≤ f ≤ 100 Hz, weiter bevorzugt 30 Hz ≤ f ≤ 80 Hz und besonders bevorzugt 40 Hz ≤ f ≤ 75 Hz. Insbesondere wenn die Getriebewelle in einer letzten Getriebestufe des Windgetriebes, die mit der Rotorwelle des Generators verbunden werden soll, vorgesehen ist, kann eine deutliche Verschiebung der kritischen Eigenfrequenzen bzw. - moden erreicht werden. Dadurch kann mit einem geringen konstruktiven Aufwand das Auftreten von Resonanzschwingungen im laufenden Betrieb und/oder Geräuschemissionen zumindest reduziert werden, wobei mit der gesamtem Windkraftanlage als betrachtetes schwingungsfähiges System auch die durch den Windrotor erzeugbaren zu erwartenden Anregungsfrequenzen berücksichtigt werden. Vorzugsweise können auch die von einer Gondel, in welche der Antriebsstrang untergebracht ist, und/oder die von einem Turm, auf dessen Spitze die Gondel vorgesehen ist, erzeugbaren zu erwartenden Anregungsfrequenzen berücksichtigt werden.

Ein weiterer Aspekt betrifft eine Verwendung einer Getriebewelle, die wie vorstehend beschrieben aus- und weitergebildet sein kann, in einem Planetengetriebe zu dem Zweck hörbaren Körperschall und/oder Luftschall und/oder Resonanzschwingungen zu reduzieren. Das Planetengetriebe ist insbesondere Teil einer Planetenstufe, die wie vorstehend beschrieben aus- und weitergebildet sein kann, und/oder Teil eines Windgetriebes, das wie vorstehend beschrieben aus- und weitergebildet ein kann und/oder Teil eines Antriebsstrangs, der wie vorstehend beschrieben aus- und weitergebildet sein kann, und/oder Teil einer Windkraftanlage, die wie vorstehend beschrieben aus- und weitergebildet sein kann. Die Getriebewelle wird insbesondere zur Übertragung des gesamten auftretenden Drehmoments verwendet. Die Getriebewelle kann vorzugsweise als Eingangswelle und/oder als Ausgangswelle des Planetengetriebes verwendet werden, beispielsweise als Planetenträgerwelle und/oder Sonnenwelle. Die Getriebewelle kann insbesondere durch eine Drehung um eine Hauptdrehachse des Planetengetriebes das gesamte auftretende Drehmoment in das Planetengetriebe einleiten und/oder aus dem Planetengetriebes ausleiten. Durch den verlängerten Weg des Drehmomentflusses kann die Steifigkeit und die Eigenfrequenz des schwingungsfähigen Gesamtsystems mit der Getriebewelle reduziert werden, wodurch eine Reduktion von störenden Schwingungen in einem Planetengetriebe ermöglicht ist.

Ein weiterer Aspekt betrifft ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Getriebewelle, die wie vorstehend beschrieben aus- und weitergebildet sein kann, oder der Planetenstufe, die wie vorstehend beschrieben aus- und weitergebildet sein kann, oder dem Windgetriebe, das wie vorstehend beschrieben aus- und weitergebildet sein kann, oder dem Antriebsstrang, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Getriebewelle oder der Planetenstufe oder dem Windgetriebe oder dem Antriebsstrang, insbesondere durch 3D-Druck, durchzuführen und/oder bei einer Verarbeitung durch eine Datenverarbeitungseinrichtung zur Durchführung einer technischen Simulation eine Simulation der Funktionsweise der Getriebewelle oder der Planetenstufe oder dem Windgetriebe oder dem Antriebsstrang durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen und/oder zu dem Zweck einer Schwingungsanalyse zu erbringen und gegebenenfalls mit an einer real produzierten erfindungsgemäßen Vorrichtung und/oder an einem Prototyp der erfindungsgemäßen Vorrichtung ermittelten Messdaten zu vergleichen.

Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildender Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise des Rotationskörpers und/oder des Haltewerkzeugs zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische Schnittansicht eines Teils eines Antriebsstrangs einer Windkraftanlage in einer ersten Ausführungsform,
Fig. 2: eine schematische Schnittansicht eines Teils eines Antriebsstrangs einer Windkraftanlage in einer zweiten Ausführungsform und
Fig. 3: eine schematische Schnittansicht eines Teils eines Antriebsstrangs einer Windkraftanlage in einer dritten Ausführungsform.

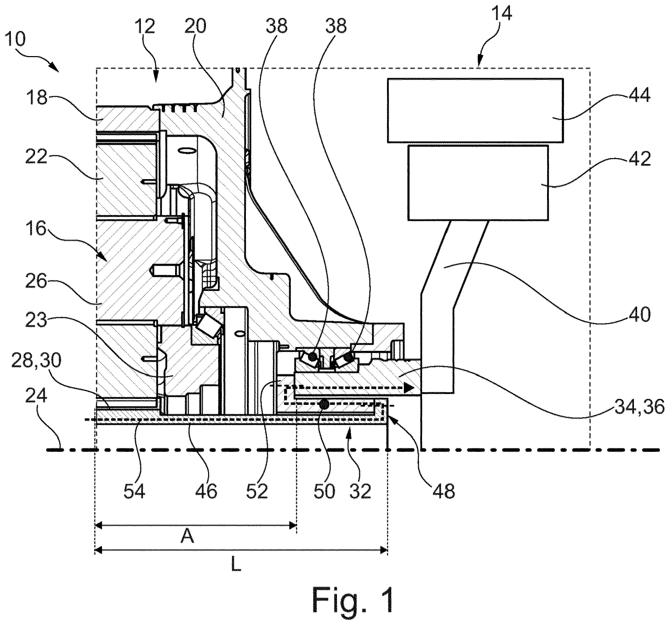

Der in Fig. 1 dargestellte Antriebsstrang 10 einer Windkraftanlage kann in einer Gondel eines Turms vorgesehen sein, um ein Drehmoment, das von einem von Wind in Drehung versetzten Windrotor stammt, in einem Windgetriebe 12 zu wandeln und einem Generator 14 zur Erzeugung von elektrischer Energie zuzuführen. Das Windgetriebe 12 weist mindestens eine Planetenstufe 16 auf, bei der es sich insbesondere um ein Planetengetriebe handelt. Das Windgetriebe 12 kann zwei oder mehr hintereinander geschaltete Planetenstufen 16 aufweisen, wobei aus Gründen der vereinfachten Darstellung nur eine Planetenstufe 16 dargestellt ist. Die Planetenstufe 16 weist ein feststehendes Hohlrad 18 auf, das mit einem Getriebegehäuse 20 fest verbunden sein kann und insbesondere selbst ebenfalls einen Teil des Getriebegehäuses 20 ausbilden kann. Mit dem Hohlrad 18 kämmt mindestens ein Planetenrad 22, wobei insbesondere drei, vier, fünf oder mehr Planetenräder 22 vorgesehen sein können. Das mindestens eine Planetenrad 22 ist an einem, beispielsweise zweiwangigen, Planetenträger 23 beabstandet zu einer Hauptdrehachse 24 der Planetenstufe 16 gelagert. Hierbei kann das Planetenrad 22 beispielsweise über ein Gleitlager an einem fest mit dem Planetenträger 23 befestigten Planetenschaft 26 gelagert sein, wobei alternativ das Planetenrad 22 fest mit dem Planetenschaft 26 befestigt sein kann, während der Planetenschaft 26 drehbar in dem Planetenträger 23 gelagert sein kann. Das mindestens eine Planetenrad 22 kämmt mit einem Sonnenrad 28, das im dargestellten Ausführungsbeispiel gleichzeitig eine als Verzahnung ausgestaltete erste Koppelstelle 30 einer als Sonnenwelle ausgestalteten Getriebewelle 32 ist. Die Getriebewelle 32 ist mit einer Rotorwelle 34 des Generators 14 verbunden. Die Rotorwelle 34 stellt im dargestellten Ausführungsbeispiel aus gleichzeitig eine Ausgangswelle 36 des Windgetriebes 12 dar, die über Lager 38, die insbesondere als geschmierte Wälzlager ausgestaltet sind, in dem Getriebegehäuse 20 gelagert ist. Das Getriebegehäuse 20 stellt gleichzeitig eine axiale Trennung des Windgetriebes 12 von dem Generator 14 bereit, so dass das Getriebegehäuse 20 gleichzeitig eine axiale Stirnseite des Getriebegehäuses und eine axiale Stirnseite eines nicht weiter dargestellten Generatorgehäuses des Generators 14 darstellt. Die Rotorwelle 34 ist mit einem Rotorträger 40 fest verbunden, mit dem wiederum ein Rotor 42 fest verbunden ist. Der Rotor 42 kann mit einem Stator 44 des Generators 14 elektromagnetisch zusammenwirken. Hierzu kann der Rotor Permanentmagnete aufweisen, während der mit dem Generatorgehäuse verbundene Stator Elektromagneten aufweisen kann.

In dem in Fig. 1 dargestellten Ausführungsbeispiel ist die als Sonnenwelle ausgestaltete Getriebewelle 32 mehrteilig ausgebildet. Die Getriebewelle 32 weist eine erste Welle 46 auf, welche die erste Koppelstelle 30 ausbildet. Die erste Welle 46 ist insbesondere als Hohlwelle ausgestaltet. Die erste Welle 46 ist an ihrem von der ersten Koppelstelle 30 weg weisenden axialen Ende über eine drehfeste Verbindung 48, beispielsweise Flanschverbindung, mit einer zweiten Welle 50 drehmomentübertragend verbunden. Die zweite Welle 50 ist im dargestellten Ausführungsbeispiel als Hohlwelle ausgestaltet, deren Innendurchmesser größer als der Außendurchmesser der ersten Welle 46 ist. Dadurch ist es möglich die zweite Welle 50 auf die erste Welle 46 aufzustecken beziehungsweise die erste Welle 46 in die zweite Welle 50 einzustecken. Die zweite Welle 50 verläuft von der drehfesten Verbindung 48 aus in Richtung auf die erste Koppelstelle 30, wobei die zweite Welle beabstandet zu der ersten Koppelstelle 30 und insbesondere auch beabstandet zu der Planetenstufe 16 über eine zweite Koppelstelle 52, insbesondere eine Flanschverbindung, mit dem als Ausgangswelle 36 wirkenden Teil der Rotorwelle 34 fest verbunden ist. Ein Drehmomentfluss 54 verläuft dadurch entlang eines zick-zack-förmigen Wegs von der ersten Koppelstelle 30 zu der zweiten Koppelstelle 52, der deutlich größer ist als ein Abstand A zwischen den Koppelstellen 30, 52 und einer axialen Gesamterstreckung L der Getriebewelle 32. Insbesondere ist es möglich weitere Zwischenwellen über drehfeste Verbindung zwischen der ersten Welle 46 und der zweiten Welle 50 vorzusehen, so dass sich der Weg des Drehmomentfluss 54 noch stärker verlängert.

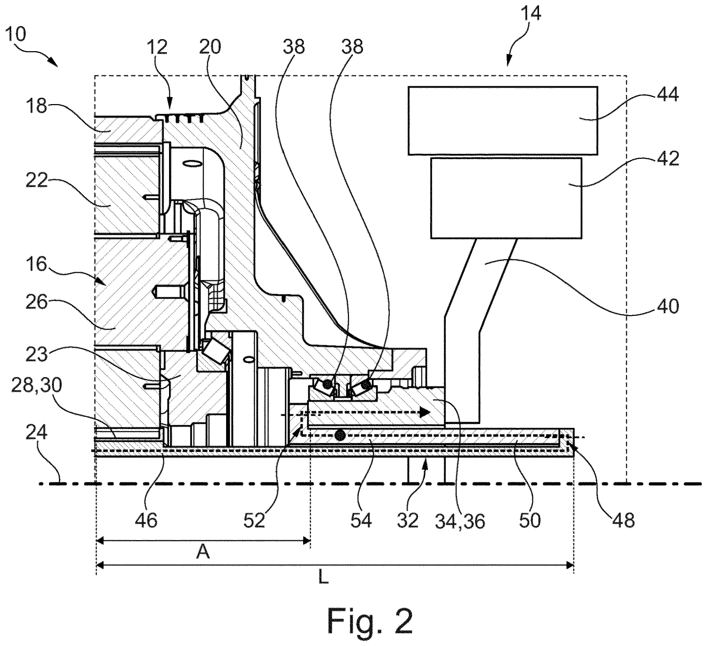

Bei dem in Fig. 1 dargestellten Ausführungsbeispiel endet die Gesamterstreckung L der Getriebewelle 32 innerhalb der Rotorwelle 34, insbesondere radial innerhalb eines für die Aufnahme der Lager 38 ausgebildeten Nabenbereichs des Getriebegehäuses 20. Wie in Fig. 2 dargestellt ist, kann die Getriebewelle 32 vorzugsweise in einen radial inneren Innenraum des Generators 14 eintauchen. Hierbei kann ausgenutzt werden, dass radial innerhalb des Rotors 42, insbesondere radial innerhalb des Rotorträgers 40 und/oder der Rotorwelle 34 ausreichend freier Bauraum zur Verfügung steht, der von dem Windgetriebe 12 für ein stärkeres lagerfreies Auskragen der als Sonnenwelle verwendeten Getriebewelle 32 genutzt werden kann. Die Getriebewelle 32 kann hierbei soweit in den Generator 14 eintauchen, dass der Rotorträger 40 und/oder der Rotor 42 in radialer Richtung betrachtet einen Teil der Getriebewelle 32 überdecken kann. Die Getriebewelle 32 ist dadurch teilweise in einem gemeinsamen Axialbereich mit dem Rotorträger 40 und/oder mit dem Rotor 42 angeordnet. Bei einem im Vergleich zur in Fig. 1 dargestellten Ausführungsform des Antriebsstrangs 10 kann bei der in Fig. 2 dargestellten Ausführungsform des Antriebsstrangs 10 bei einem identischen Abstand A zwischen den Koppelstellen 30, 52 eine erheblich größere Gesamterstreckung L der Getriebewelle 32 und ein damit verbundener erheblich verlängerter Weg für den Drehmomentfluss 54 erreicht werden.

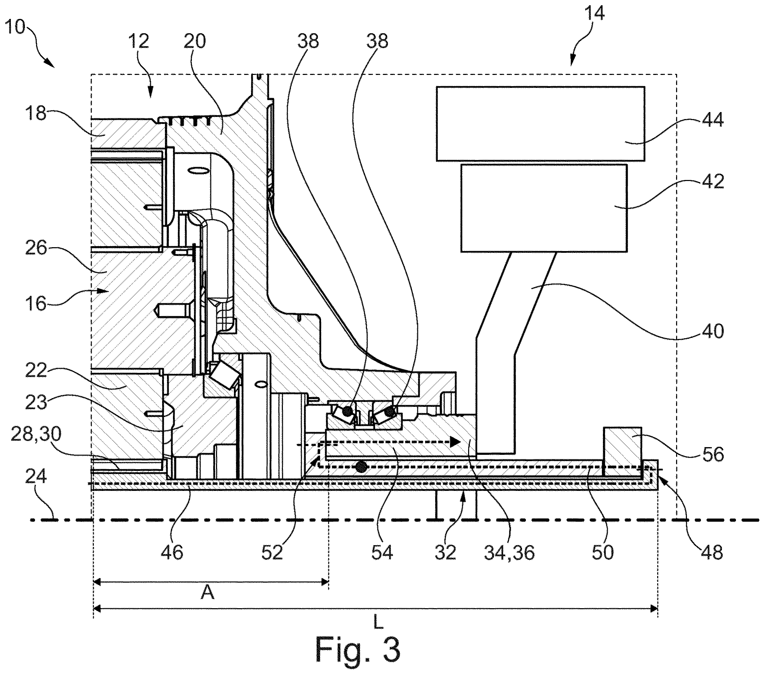

Bei der in Fig. 3 dargestellten Ausführungsform des Antriebsstrangs 10 kann im Vergleich zu der in Fig. 2 dargestellten Ausführungsform des Antriebsstrangs 10 der Bauraum innerhalb des Generators und die gute generatorseitige Zugänglichkeit weiter ausgenutzt werden, indem zwischen der ersten Welle 46 und der zweiten Welle 50 oder einer nicht dargestellten dazwischengeschalteten Zwischenwelle ein Kupplungselement 56, insbesondere in Form einer elastischen Kupplung, vorgesehen ist. Dadurch können die Schwingungseigenschaften der Getriebewelle 32 weiter positiv beeinflusst werden.

## Patentansprüche

1. Getriebewelle (32), insbesondere Sonnenwelle, für ein Planetengetriebe, mit einer ersten Koppelstelle (30), insbesondere Verzahnung, zum Einleiten eines Drehmoments und
einer zweiten Koppelstelle (52) zum Ausleiten des Drehmoments, insbesondere an eine Rotorwelle (34) eines Generators (14),
wobei die axialen Anteile eines Wegs eines Drehmomentflusses (54) von der ersten Koppelstelle (30) zu der zweiten Koppelstelle (52) größer als ein axialer Abstand zwischen der ersten Koppelstelle (30) zu der zweiten Koppelstelle (52) ist.

2. Getriebewelle (32) nach Anspruch 1, wobei für den Weg W des Drehmomentflusses (54) und dem Abstand A von voneinander wegweisenden Axialseiten der ersten Koppelstelle (30) und der zweiten Koppelstelle (52) 1,1 ≤ W/A ≤ 12,0, insbesondere 1,5 ≤ W/A ≤ 6,0, vorzugsweise 2,0 ≤ W/A ≤ 4,0 und besonders bevorzugt 2,5 ≤ W/A ≤ 3,0 gilt.

3. Getriebewelle (32) nach Anspruch 1 oder 2, wobei eine Gesamterstreckung L der Getriebewelle (32) größer als der Abstand A von voneinander wegweisenden Axialseiten der ersten Koppelstelle (30) und der zweiten Koppelstelle (52) ist, wobei 1,01 ≤ L/A ≤ 6,0, insbesondere 1,05 ≤ L/A ≤ 4,0, vorzugsweise 1,10 ≤ L/A ≤ 2,0 und besonders bevorzugt 1,25 ≤ L/A ≤ 1,75 gilt.

4. Getriebewelle (32) nach einem der Ansprüche 1 bis 3, wobei die erste Koppelstelle (30) mit einer ersten Welle (46) direkt verbunden ist und die zweite Koppelstelle (52) mit einer von der ersten Welle (46) verschiedenen und mit der ersten Welle (46) direkt oder indirekt über mindestens eine Zwischenwelle drehfest verbundenen zweiten Welle (50) direkt verbunden ist, wobei die erste Welle (46) und die zweite Welle (50) in radialer Richtung betrachtet sich einander zumindest teilweise in einem gemeinsamen Axialbereich überlappen, wobei insbesondere die mindestens eine Zwischenwelle in radialer Richtung innerhalb des gemeinsamen Axialbereichs in radialer Richtung zwischen der ersten Welle (46) und der zweiten Welle (50) angeordnet ist.

5. Getriebewelle (32) nach einem der Ansprüche 1 bis 4, wobei die erste Welle (46) einen Außendurchmesser d1 und die zweite Welle (50) einen Außendurchmesser d2 aufweist, wobei für ein als d1/d2 oder d2/d1 definiertes Verhältnis V 1,01 ≤ V ≤ 5,0, insbesondere 1,05 ≤ V ≤ 3,0, vorzugsweise 1,10 ≤ V ≤ 2,0 und besonders bevorzugt 1,25 ≤ V ≤ 1,5 gilt.

6. Getriebewelle (32) nach Anspruch 4 oder 5, wobei die, insbesondere als Steckverzahnung oder Flanschverbindung ausgestaltete, drehfeste Verbindung (48) der ersten Welle (46) mit der zweiten Welle (50) oder mit der Zwischenwelle in axialer Richtung außerhalb eines Axialbereichs der ersten Koppelstelle (30) und der zweiten Koppelstelle (52) und außerhalb eines axialen Zwischenraums zwischen der ersten Koppelstelle (30) und der zweiten Koppelstelle (52) ausgebildet ist.

7. Getriebewelle (32) nach Anspruch 5 oder 6, wobei die erste Welle (46) außerhalb der ersten Koppelstelle (30) und/oder die zweite Welle (50) außerhalb der zweiten Koppelstelle (52) sowie jeweils außerhalb der drehfesten Verbindung (48) als Hohlwelle mit einer Wandstärke s ausgebildet ist, wobei bezogen auf eine Länge l der ersten Welle (46) und/oder der zweiten Welle (50) außerhalb der jeweiligen Koppelstelle (30, 52) und außerhalb der drehfesten Verbindung (48) 0,01 ≤ s/l ≤ 0,50, insbesondere 0,02 ≤ s/l ≤ 0,25, vorzugsweise 0,03 ≤ s/l ≤ 0,15 und besonders bevorzugt 0,05 ≤ s/l ≤ 0,10 gilt.

8. Getriebewelle (32) nach einem der Ansprüche 5 bis 7, wobei ein die erste Welle (46) und die zweite Welle (50) oder die Zwischenwelle und/oder die zweite Welle (50) und die Zwischenwelle kontaktierendes elastisch verformbares Dämpferelement und/oder, insbesondere schaltbares und/oder regelbares, Kupplungselement (56) vorgesehen ist.

9. Getriebewelle (32) nach einem der Ansprüche 1 bis 8, wobei zwischen der ersten Koppelstelle (30) und der zweiten Koppelstelle (52) innerhalb des Drehmomentflusses (54) eine elektrische Isolierung ausgebildet ist, wobei insbesondere die zweite Welle (50) und/oder eine/die Zwischenwelle ganz oder zumindest abschnittsweise aus einem elektrisch isolierenden Material hergestellt ist.

10. Planetenstufe (16), insbesondere Planetengetriebe, mit einer Getriebewelle (32) nach einem der Ansprüche 1 bis 9, wobei die erste Koppelstelle (30) in einem gemeinsamen Axialbereich mit Planetenrädern (22) und/oder einem Hohlrad (18) der Planetenstufe (16) angeordnet ist und die zweite Koppelstelle (52) zu den Planetenrädern (22) und/oder dem Hohlrad (18) axial beabstandet angeordnet ist.

11. Windgetriebe (12) zur Drehzahlwandlung in einem Antriebstrang (10) einer Windkraftanlage, mit mindestens einer Planetenstufe (16) nach Anspruch 10 und einem Getriebegehäuse (20), wobei insbesondere das Getriebegehäuse (20) in radialer Richtung der Getriebewelle (32) betrachtet die Getriebewelle (32) nur teilweise überdeckt, wobei das Getriebegehäuse (20) sowohl die erste Koppelstelle (30) als auch die zweite Koppelstelle (52) der Getriebewelle (32) überdeckt.

12. Antriebsstrang (10) für eine Windkraftanlage, mit einem Windgetriebe (12) nach Anspruch 11 zum Wandeln eines von einem Windrotor einleitbaren Drehmoments und einem mit dem Windgetriebe (12) gekoppelten Generator (14) zur Erzeugung elektrischer Energie aus dem mit Hilfe des Windgetriebes (12) eingeleiteten Drehmomentfluss (54), wobei insbesondere der gesamte in den Generator (14) eingeleitete Drehmomentfluss (54) über die Getriebewelle (32) verläuft.

13. Antriebsstrang nach Anspruch 12, wobei ein Teil der Getriebewelle (32) des Windgetriebes (12) in den Generator (14) hineinragt und die erste Koppelstelle (30) in dem Windgetriebe (12) vorgesehen ist, wobei die die zweite Koppelstelle (52) innerhalb des Windgetriebe (12) oder innerhalb des Generators (14) vorgesehen ist.

14. Verwendung einer Getriebewelle (32) nach einem der Ansprüche 1 bis 9 in einem Planetengetriebe zu dem Zweck hörbaren Körperschall und/oder Luftschall und/oder Resonanzschwingungen zu reduzieren.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Getriebewelle (32) nach einem der Ansprüche 1 bis 9 oder der Planetenstufe (16) nach Anspruch 10 oder dem Windgetriebe (12) nach Anspruch 11 oder den Antriebsstrang (10) nach Anspruch 12 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile der Getriebewelle (32) oder der Planetenstufe (16) oder dem Windgetriebe (12) oder dem Antriebsstrang (10), insbesondere durch 3D-Druck, durchzuführen
und/oder
bei einer Verarbeitung durch eine Datenverarbeitungseinrichtung zur Durchführung einer technischen Simulation eine Simulation der Funktionsweise der Getriebewelle (32) oder der Planetenstufe (16) oder dem Windgetriebe (12) oder dem Antriebsstrang (10) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen und/oder zu dem Zweck einer Schwingungsanalyse zu erbringen.
